# EUROPEAN PATENT SPECIFICATION

(11) **EP 1 072 190 B1**
(45) Date of publication and mention of the grant of the patent: **13.10.2004**
(21) Application number: 00115035.8
(22) Date of filing: 25.07.2000
(51) Int. Cl.: A01K 87/00, A01K 87/08

(54) **Implement having a grip surface with improved sliding, particularly tubular segment of fishing rod**
Gerät mit einer Griffoberfläche mit verbesserter Gleitschicht, insbesondere das rohrförmige Segment einer Angelrute
Outil ayant une surface de préhension à glissement amélioré, en particulier un segment tubulaire d'une canne à pêche

(30) Priority: 28.07.1999 IT BO990099 U
(43) Date of publication of application: 31.01.2001
(73) Proprietor: REGLASS S.p.A., I-40061 Minerbio (Bologna) (IT)
(72) Inventor: Pirazzini, Luca, 40100 Bologna (IT)
(74) Representative: Modiano, Guido, Dr.-Ing.

(56) References cited:
- PATENT ABSTRACTS OF JAPAN vol. 013, no. 335 (M-856), 27 July 1989 (1989-07-27) & JP 01 113226 A (DAIWA SEIKO INC), 1 May 1989 (1989-05-01)

## Description

The present invention relates to an implement having a grip surface with improved sliding, particularly a tubular segment of a fishing rod.

Sports implements, or other kinds of implement, are known which are formed by superimposed layers of thin sheets of resins with carbon fibers, which is a highly advanced and lightweight material which combines considerable characteristics in terms of strength and elasticity with very low weight.

In particular, conventional modular fishing rods with interlocking elements are constituted by a plurality of tubular segments having gradually smaller diameters which are mutually interlocked sequentially.

Some fishing techniques which do not use a reel, such as for example the technique known as roubaisienne, entail recovering the fish, after it has swallowed the hook, by disassembling one after the other the various segments of the rod until the prey is reached: the rod must then be reassembled to return it to its working length at an optimum distance, which can be even more than a dozen meters.

The operations for extending and shortening the rod are performed by the angler very frequently, several times an hour, and they entail gradually sliding the rod on a "supporting" hand, which is held with the palm facing upward, while the other hand slides the rod back and forth.

The surface of rods currently being manufactured is glossy and is affected by a plurality of narrow, sharp-edged protruding crests which have a sawtooth cross-section; this is due to the fact that the implement is formed by means of resins with carbon fibers which are thermoformed after wrapping under tension, with a helical path and a short pitch, of at least one tape of glossy material such as plastics having a high tensile strength modulus: during thermoforming, said tape provides the necessary pressure to a tube which is obtained by superimposing a plurality of sheets of resin and carbon fibers which are orientated in different and appropriate manners: when it is removed after thermoforming, the impression of the tape remains on the article in the form of said narrow, sharp-edged crests.

Sliding on the "supporting" hand, especially if the hand is wet, entails considerable friction caused by the narrow sawtooth crests; such friction causes unpleasant reddening and sometimes pain, abrasions, calluses or the like.

On the other hand, grinding the surface of the carbon fiber rod would damage the fibers and would reduce the thickness of the material unevenly and unpredictably.

Japanese Patent Application published with the number 01 113226 discloses a method for reducing the number of spiral projections produced in thermosetting when a fishing rod is manufactured, which comprises the step of fastening a tape such as a cellophane tape around a prepreg in a manner that the side edges of the tape are not overlapped with each other. The projections formed on the surface of the thermoset material are then removed by grinding to complete the fishing rod.

The aim of the present invention is to obviate the cited drawbacks of conventional devices, i.e., to provide an implement with a grip surface having improved sliding, particularly a tubular segment of a fishing rod, whose use in any environmental condition does not entail reddening, abrasions or the like on the hands and which is produced without grinding the surface of the article.

Within the scope of this aim, an object of the present invention is to provide an implement which is simple, relatively easy to provide in practice, safe in use, effective in operation and has a relatively low cost.

This aim and this object are both achieved by the implement with a grip surface having improved sliding according to claim 1.

Further characteristics and advantages of the present invention will become better apparent from the following detailed description of a preferred but not exclusive embodiment of an implement with a grip surface having improved sliding, particularly a tubular segment of a fishing rod, according to the invention, illustrated only by way of non-limitative example in the accompanying drawings, wherein:
Figure 1 is a schematic view of the appearance of the surface of the implement having a surface with improved sliding according to the invention;
Figure 2 is a schematic view of how the surface of the implement according to the invention is obtained.

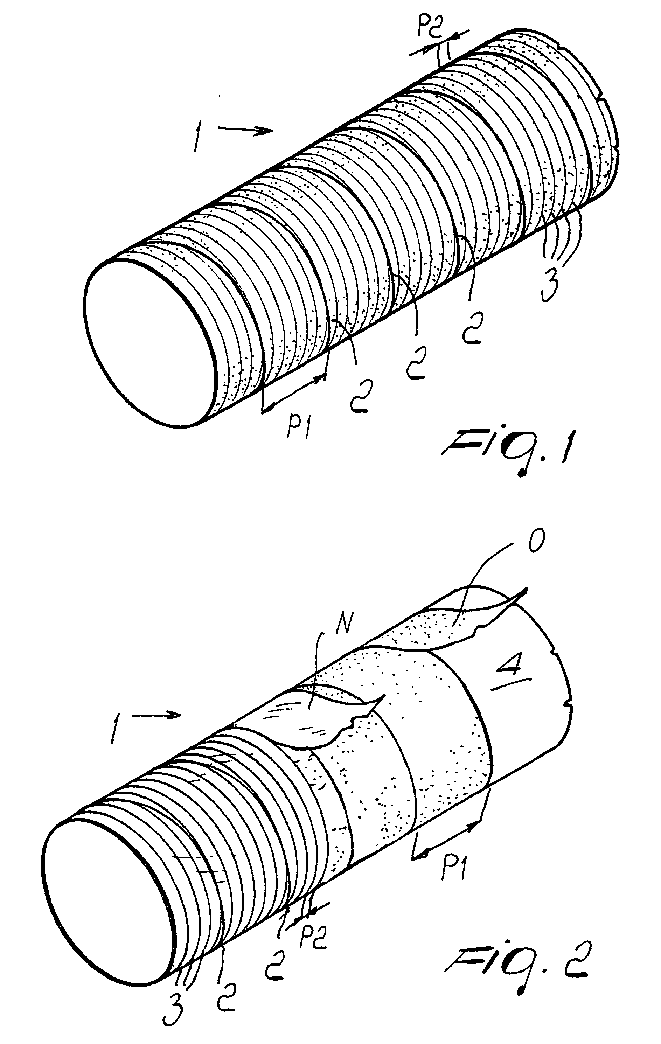

With particular reference to the above figures, the reference numeral 1 generally designates the implement with a grip surface having improved sliding, particularly a tubular segment of a fishing rod, according to the invention.

The implement 1 has a flat-finish surface which has a faintly raised small flattened crest 2 which follows a helical path having a rather long pitch P1.

The surface has a faintly visible additional crest 3, which is less raised than the crest 2 and has a significantly shorter pitch P2.

The implement is produced with carbon fiber resins which are thermoformed in a known manner after wrapping under tension, along a helical path with a short pitch P2, at least one tape N of glossy material such as plastics with a high tensile strength modulus; the tape N provides the necessary pressure during thermoforming on a frustum-shaped tubular element 4 obtained by rolling into a tubular shape a plurality of sheets of resin and carbon fibers orientated in different and appropriate manners.

In order to achieve opacity, a thin flat-finish tape O, made of a material such as plastics, which can have a low tensile strength modulus, is wrapped with a pitch P1 onto the frustum-shaped tubular body of resins and carbon fibers before wrapping with a pitch P2 the traction tape N for thermoforming.

The pitch P1 has a length which is substantially comparable to the width of the tape and is preferably greater than three times the pitch P2.

The wrapping pitch P1 can also be infinite, in that the flat-finish tape O has a width which is practically equal to the length of the tubular segment of rod and in that the slight crest 2 is substantially straight.

After thermoforming has been performed, both the short-pitch traction tape N and the long-pitch flatting tape O are eliminated.

The flat-finish surface and the presence of a long-pitch flattened crest and of a crest with a short pitch which is far less raised greatly increase the slidability of the implement in any environmental condition.

It has thus been observed that the invention achieves the intended aim and object.

The invention thus conceived is susceptible of numerous modifications and variations, all of which are within the scope of the inventive concept.

All the details may furthermore be replaced with other technically equivalent ones.

In practice, the materials used, as well as the shapes and the dimensions, may be any according to requirements without thereby abandoning the scope of the protection of the appended claims.

The disclosures in Italian Utility Model Application No. BO99U000099 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An implement (1) with a grip surface having improved sliding, particularly a tubular segment of a fishing rod, having a faintly raised small flattened crest (2) which follows a helical path having a long pitch (P1), **characterized in that** the surface is flat finish.

2. The implement according to claim 1, **characterized in that** the surface has a faintly raised additional crest (3) which is narrower and has a significantly shorter pitch (P2).

3. The implement according to one or more of the preceding claims, **characterized in that** it is made of resins with carbon fibers which are thermoformed after wrapping, under traction and with a short-pitch helical path (P2), at least one tape (N) of glossy material with a high tensile strength modulus, which is suitable to apply pressure, during thermoforming, to a frustum-shaped tubular element (4) which is obtained by rolling into a tube-like shape a plurality of sheets of resin and carbon fibers orientated in various manners.

4. The implement according to claim 3, **characterized in that** before wrapping the traction tape (N) for thermoforming on the frustum-shaped tubular body (4) of resins and carbon fibers, a flat-finish thin tape (O), made of a material such as plastics, with a low tensile strength modulus, is wrapped with a long pitch (P1).

5. The implement according to one or more of the preceding claims, **characterized in that** the pitch (P1) with which said flattened long-pitch helical crest (2) winds is substantially comparable, in terms of length, with the width of the flat-finish tape (O) and is more than three times the pitch of the traction tape (N).

6. The implement according to one or more of the preceding claims, **characterized in that** the winding pitch (P1) of said flattened long-pitch helical crest (2) is infinite, the crest (2) being substantially straight and the width of the flat-finish tape (O) being substantially equal to the length of the tubular segment of rod (4).

## Patentansprüche

1. Gerät (1) mit einer Greifoberfläche, die eine verbesserte Gleitung aufweist, insbesondere ein röhrenförmiges Segment einer Angelrute, das einen schwach erhabenen, kleinen, abgeflachten Grat (2) aufweist, der einem wendelförmigen Pfad mit einer großen Teilung (P1) folgt, **dadurch gekennzeichnet, dass** die Oberfläche ein mattes Finish hat.

2. Gerät gemäß Anspruch 1, **dadurch gekennzeichnet, dass** die Oberfläche einen zusätzlichen schwach erhabenen Grat (3) aufweist, der schmaler ist und eine signifikant kürzere Teilung (P2) aufweist.

3. Gerät gemäß einem oder mehreren der vorstehenden Ansprüche, **dadurch gekennzeichnet, dass** es aus Harz mit Kohlefasern hergestellt ist, die nach dem Aufwickeln zumindest eines Bands (N) aus glänzendem Material mit einem hohen Zugfestigkeitsmodulus, der zum Anlegen von Druck während eines Thermoformens geeignet ist, unter Zugkraft und mit einem kurzen wendelförmigen Pfad(P2) auf ein kegelstumpfförmiges röhrenartiges Element (4), das durch Rollen einer Mehrzahl von Harzbögen und in verschiedenen Weisen orientierten Kohlfasern in eine röhrenartige Form erhalten wird, thermogeformt werden.

4. Gerät gemäß Anspruch 3, **dadurch gekennzeichnet**, das vor dem Aufwickeln des Zugbands (N) zum Thermoformen auf dem kegelstumpfförmigen röhrenartigen Körper (4) aus Harzen und Kohlefasern ein dünnes Band (O) mit mattem Finish, das aus einem Material wie Plastik mit einem niedrigen Zugfestigkeitsmodulus hergestellt ist, mit einer langen Teilung (P1) aufgewickelt wird.

5. Gerät gemäß einem oder mehreren der vorstehenden Ansprüche, **dadurch gekennzeichnet, dass** die Teilung (P1), mit der der abgeflachte wendelförmige Grat (2) Ianger Teilung gewickelt ist, im Sinne der Länge im wesentlichen mit der Breite des Bands (O) mit mattem Finish vergleichbar ist und mehr als die dreifache Teilung des Zugbands (N) hat.

6. Gerät gemäß einem oder mehreren der vorstehenden Ansprüche, **dadurch gekennzeichnet, dass** die Teilung (P1) des abgeflachten wendelförmigen Grats (2) langer Teilung unendlich ist, wobei der Grat (2) im wesentlichen gerade ist und die Breite des Bands (O) mit mattem Finish gleich der Länge des röhrenartigen Segments der Rute (4) ist.

## Revendications

1. Un outil (1) muni d'une surface de préhension à glissement amélioré, en particulier un segment tubulaire d'une canne à pêche, ayant une crête (2) aplatie de petite dimension, faiblement en relief, suivant une trajectoire hélicoïdale avec un pas (P1) long, **caractérisé en ce que** la surface a une finition mate.

2. L'outil selon la revendication 1, **caractérisé en ce que** la surface présente une crête (3) additionnelle faiblement en relief, plus étroite et ayant un pas (P2) plus court de manière significative.

3. L'outil selon une ou plusieurs des revendications précédentes, **caractérisé en ce qu'**il est réalisé en résines avec des fibres de carbone thermoformées après enveloppement, sous traction et avec une trajectoire hélicoïdale à pas (P2) court, d'au moins un ruban (N) de matériau brillant, à module de résistance en traction élevée, convenant pour appliquer une pression durant le thermoformage, sur un élément tubulaire (4) de forme tronconique, obtenu par roulage en forme de tube d'une pluralité de feuilles de résine et de fibres de carbone, orientées de diverses manières.

4. L'outil selon la revendication 3, **caractérisé en ce que**, avant l'enveloppement du ruban de traction (N) pour le thermoformage sur le corps tubulaire (4) de forme tronconique en résines et fibres de carbone, un ruban mince (O) de finition mate, formé d'un matériau tel qu'une matière plastique, avec un faible module de résistance à la traction, est enroulé avec un pas (P1) long.

5. L'outil selon l'une ou plusieurs des revendications précédentes, **caractérisé en ce que** le pas (P1), sous lequel ladite crête hélicoïdale (2) aplatie à pas long s'enroule est pratiquement comparable en termes de longueur à la largeur du ruban (O) de finition mate et fait plus de trois fois le pas du ruban de traction (N).

6. L'outil selon l'une ou plusieurs des revendications précédentes, **caractérisé en ce que** le pas d'enroulement (P1) de ladite crête hélicoïdale (2) aplatie à pas long, est infini, la crête (2) étant sensiblement rectiligne et la largeur du ruban (O) de finition mate étant sensiblement identique à la longueur du segment tubulaire de canne (4).
